# EUROPEAN PATENT APPLICATION

(11) **EP 4 738 963 A1**
(43) Date of publication of application: **06.05.2026**
(21) Application number: 24830334.9
(22) Date of filing: 27.05.2024
(51) Int. Cl.: H04W 72/231

(54) **RADIO RESOURCE CONTROL PARAMETER MANAGEMENT METHOD AND APPARATUS, AND STORAGE MEDIUM**

(30) Priority: 28.06.2023 CN 202310779177
(71) Applicant: Datang Mobile Communications Equipment Co., Ltd., Beijing 100085 (CN)
(72) Inventor: CHEN, Li, Beijing 100085 (CN)
(74) Representative: Studio Torta S.p.A.
(86) International application number: PCT/CN2024/095540
(87) International publication number: WO 2025/001686

(57) **Abstract**

Provided are an RRC parameter management method and apparatus, and a storage medium. The method comprises: determining an association relationship between a configuration object and a first RRC parameter; and on the basis of a first configuration object and the association relationship, taking into effect a first RRC parameter associated with the first configuration object.

## Description

### CROSS-REFERENCES TO RELATED APPLICATIONS

The present application claims priority to Chinese Patent Application No. 202310779177.5 filed on Wednesday, June 28, 2023, entitled "Radio Resource Control Parameter Management Method and Apparatus, and Storage Medium", which is hereby incorporated by reference in its entirety.

### FIELD

The present application relates to the field of communication, and in particular to a radio resource control (RRC) parameter management method, an apparatus, and a storage medium.

### BACKGROUND

In related art, an RRC parameter is semi-statically configured, an RRC signaling takes a long time to be activated, and RRC parameter management has a large delay. Therefore, the related art cannot meet increasingly diversified services and user-centric needs of the 6th generation mobile communication (6G).

### BRIEF SUMMARY

The present application provides a radio resource control (RRC) parameter management method, an apparatus, and a storage medium to solve the problem of large delay in RRC parameter management in related art.

An embodiment of the present application provides a radio resource control (RRC) parameter management method, performed by a terminal, the method including:
determining associations between configuration objects and first RRC parameters and
activating, based on a first configuration object and the associations, a first RRC parameter associated with the first configuration object.

In some embodiments, determining the associations between the configuration objects and the first RRC parameters includes:
receiving a configuration message from a network device, where the configuration message includes the associations between the configuration objects and the first RRC parameters, or indication information for indicating the associations between the configuration objects and the first RRC parameters; and
determining, based on the configuration message, the associations between the configuration objects and the first RRC parameters.

In some embodiments, the method further includes:
determining a second RRC parameter, where the second RRC parameter is active across different configuration objects.

In some embodiments, activating, based on the first configuration object and the associations, the first RRC parameter associated with the first configuration object includes:
determining, based on the first configuration object and the associations, the first RRC parameter associated with the first configuration object, and receiving, from a network device, instruction information that instructs to activate the first RRC parameter associated with the first configuration object; and
activating the first RRC parameter associated with the first configuration object.

In some embodiments, activating, based on the first configuration object and the associations, the first RRC parameter associated with the first configuration object includes:
determining, based on the first configuration object and the associations, the first RRC parameter associated with the first configuration object, and activating the first RRC parameter associated with the first configuration object.

In some embodiments, the method further includes:
transmitting, to a network device, feedback information indicating that the first RRC parameter associated with the first configuration object is activated.

In some embodiments, activating, based on the first configuration object and the associations, the first RRC parameter associated with the first configuration object includes:
determining, based on the first configuration object and the associations, the first RRC parameter associated with the first configuration object, and transmitting, to a network device, feedback information indicating that the first RRC parameter associated with the first configuration object is activated; and
activating the first RRC parameter associated with the first configuration object.

In some embodiments, the feedback information indicating that the first RRC parameter associated with the first configuration object is activated is carried by one or more of following messages:
a media access control-control element (MAC-CE) message; or
an uplink control information (UCI) message.

In some embodiments, transmitting, to the network device, the feedback information indicating that the first RRC parameter associated with the first configuration object is activated includes:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
where the second configuration object is an object used when interacting with a network before interacting with the network via the first configuration object.

In some embodiments, the method further includes:
releasing a first RRC parameter associated with a second configuration object, where the second configuration object is an object used when interacting with a network before interacting with the network via the first configuration object.

In some embodiments, the configuration object includes one or more of:
a network node; or
a physical layer resource.

In some embodiments, the network node includes one or more of:
a central unit (CU);
a distributed unit (DU);
a transmission reception point (TRP);
a transmission reception point (TRP) group;
a cell; or
a cell group.

In some embodiments, the physical layer resource includes one or more of:
an operating band;
a bandwidth part (BWP); or
a beam.

In some embodiments, the first RRC parameter includes one or more of:
a protocol stack configuration parameter; or
a reliability configuration parameter.

In some embodiments, the protocol stack configuration parameter includes one or more of:
a service data adaptation protocol (SDAP) layer configuration parameter;
a packet data convergence protocol (PDCP) layer configuration parameter;
a radio link control (RLC) layer configuration parameter; or
a physical layer resource configuration parameter.

In some embodiments, the reliability configuration parameter includes one or more of:
a hybrid automatic repeat request (HARQ) configuration parameter;
an automatic repeat request (ARQ) configuration parameter; or
a packet data convergence protocol (PDCP) retransmission configuration parameter.

An embodiment of the present application provides a radio resource control (RRC) parameter management method, performed by a network device, the method including:
transmitting a configuration message to a terminal, where the configuration message includes associations between configuration objects and first RRC parameters, or indication information for indicating associations between configuration objects and first RRC parameters, and the associations are used for activating a first RRC parameter associated with a first configuration object.

In some embodiments, the method further includes:
transmitting, to the terminal, a message including a second RRC parameter, where the second RRC parameter is active across different configuration objects.

In some embodiments, the method further includes:
transmitting, to the terminal, indication information indicating that the first RRC parameter associated with the first configuration object is activated.

In some embodiments, the method further includes:
receiving, from the terminal, feedback information indicating that the first RRC parameter associated with the first configuration object is activated.

In some embodiments, receiving, from the terminal, feedback information indicating that the first RRC parameter associated with the first configuration object is activated includes:
receiving, from the terminal, the feedback information indicating that the first RRC parameter associated with the first configuration object is activated via a second configuration object, using a first RRC parameter associated with the second configuration object;
receiving, from the terminal, the feedback information indicating that the first RRC parameter associated with the first configuration object is activated via the first configuration object, using the first RRC parameter associated with the first configuration object;
receiving, from the terminal, the feedback information indicating that the first RRC parameter associated with the first configuration object is activated via a second configuration object, using a preset RRC parameter; or,
receiving, from the terminal, the feedback information indicating that the first RRC parameter associated with the first configuration object is activated via the first configuration object, using a preset RRC parameter;
where the second configuration object is an object used when interacting with the terminal before interacting with the terminal via the first configuration object.

In some embodiments, the method further includes:
transmitting, to a second configuration object, feedback information indicating that the first RRC parameter associated with the first configuration object is activated.

An embodiment of the present application provides a terminal, including a memory, a transceiver and a processor,
where the memory is used for storing a computer program; the transceiver is used for receiving and transmitting data under control of the processor; and the processor is used for reading the computer program in the memory and performing following operations:
determining associations between configuration objects and first RRC parameters and
activating, based on a first configuration object and the associations, a first RRC parameter associated with the first configuration object.

In some embodiments, determining the associations between the configuration objects and the first RRC parameters includes:
receiving a configuration message from a network device, where the configuration message includes the associations between the configuration objects and the first RRC parameters, or indication information for indicating the associations between the configuration objects and the first RRC parameters; and
determining, based on the configuration message, the associations between the configuration objects and the first RRC parameters.

In some embodiments, the processor is further used for reading the computer program in the memory and performing following operation:
determining a second RRC parameter, where the second RRC parameter is active across different configuration objects.

In some embodiments, activating, based on the first configuration object and the associations, the first RRC parameter associated with the first configuration object includes:
determining, based on the first configuration object and the associations, the first RRC parameter associated with the first configuration object, and receiving, from a network device, instruction information that instructs to activate the first RRC parameter associated with the first configuration object; and
activating the first RRC parameter associated with the first configuration object.

In some embodiments, activating, based on the first configuration object and the associations, the first RRC parameter associated with the first configuration object includes:
determining, based on the first configuration object and the associations, the first RRC parameter associated with the first configuration object, and activating the first RRC parameter associated with the first configuration object.

In some embodiments, the processor is further used for reading the computer program in the memory and performing following operation:
transmitting, to a network device, feedback information indicating that the first RRC parameter associated with the first configuration object is activated.

In some embodiments, activating, based on the first configuration object and the associations, the first RRC parameter associated with the first configuration object includes:
determining, based on the first configuration object and the associations, the first RRC parameter associated with the first configuration object, and transmitting, to a network device, feedback information indicating that the first RRC parameter associated with the first configuration object is activated; and
activating the first RRC parameter associated with the first configuration object.

In some embodiments, the feedback information indicating that the first RRC parameter associated with the first configuration object is activated is carried by one or more of following messages:
a media access control-control element (MAC-CE) message; or
an uplink control information (UCI) message.

In some embodiments, transmitting, to the network device, the feedback information indicating that the first RRC parameter associated with the first configuration object is activated includes:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
where the second configuration object is an object used when interacting with a network before interacting with the network via the first configuration object.

In some embodiments, the processor is further used for reading the computer program in the memory and performing following operation:
releasing a first RRC parameter associated with a second configuration object, where the second configuration object is an object used when interacting with a network before interacting with the network via the first configuration object.

In some embodiments, the configuration object includes one or more of:
a network node; or
a physical layer resource.

In some embodiments, the network node includes one or more of:
a central unit (CU);
a distributed unit (DU);
a transmission reception point (TRP);
a transmission reception point (TRP) group;
a cell; or
a cell group.

In some embodiments, the physical layer resource includes one or more of:
an operating band;
a bandwidth part (BWP); or
a beam.

In some embodiments, the first RRC parameter includes one or more of:
a protocol stack configuration parameter; or
a reliability configuration parameter.

In some embodiments, the protocol stack configuration parameter includes one or more of:
a service data adaptation protocol (SDAP) layer configuration parameter;
a packet data convergence protocol (PDCP) layer configuration parameter;
a radio link control (RLC) layer configuration parameter; or
a physical layer resource configuration parameter.

In some embodiments, the reliability configuration parameter includes one or more of:
a hybrid automatic repeat request (HARQ) configuration parameter;
an automatic repeat request (ARQ) configuration parameter; or
a packet data convergence protocol (PDCP) retransmission configuration parameter.

An embodiment of the present application provides a network device, including: a memory, a transceiver, and a processor,
where the memory is used for storing a computer program; the transceiver is used for receiving and transmitting data under control of the processor; and the processor is used for reading the computer program in the memory and performing following operation:
transmitting a configuration message to a terminal, where the configuration message includes associations between configuration objects and first RRC parameters, or indication information for indicating associations between configuration objects and first RRC parameters, and the associations are used for activating a first RRC parameter associated with a first configuration object.

In some embodiments, the processor is further used for reading the computer program in the memory and performing following operation:
transmitting, to the terminal, a message including a second RRC parameter, where the second RRC parameter is active across different configuration objects.

In some embodiments, the processor is further used for reading the computer program in the memory and performing following operation:
transmitting, to the terminal, indication information indicating that the first RRC parameter associated with the first configuration object is activated.

In some embodiments, the processor is further used for reading the computer program in the memory and performing following operation:
receiving, from the terminal, feedback information indicating that the first RRC parameter associated with the first configuration object is activated.

In some embodiments, receiving, from the terminal, feedback information indicating that the first RRC parameter associated with the first configuration object is activated includes:
receiving, from the terminal, the feedback information indicating that the first RRC parameter associated with the first configuration object is activated via a second configuration object, using a first RRC parameter associated with the second configuration object;
receiving, from the terminal, the feedback information indicating that the first RRC parameter associated with the first configuration object is activated via the first configuration object, using the first RRC parameter associated with the first configuration object;
receiving, from the terminal, the feedback information indicating that the first RRC parameter associated with the first configuration object is activated via a second configuration object, using a preset RRC parameter; or,
receiving, from the terminal, the feedback information indicating that the first RRC parameter associated with the first configuration object is activated via the first configuration object, using a preset RRC parameter;
where the second configuration object is an object used when interacting with the terminal before interacting with the terminal via the first configuration object.

In some embodiments, the processor is further used for reading the computer program in the memory and performing following operation:
transmitting, to a second configuration object, feedback information indicating that the first RRC parameter associated with the first configuration object is activated.

An embodiment of the present application provides a radio resource control (RRC) parameter management apparatus, including:
a first determining module, used for determining associations between configuration objects and first RRC parameters and
an activating module, used for activating, based on a first configuration object and the associations, a first RRC parameter associated with the first configuration object.

In some embodiments, the first determining module includes a receiving unit and a first determining unit;
the receiving unit is used for receiving a configuration message from a network device, where the configuration message includes the associations between the configuration objects and the first RRC parameters, or indication information for indicating the associations between the configuration objects and the first RRC parameters; and
the first determining unit is used for determining, based on the configuration message, the associations between the configuration objects and the first RRC parameters.

In some embodiments, the apparatus further includes a second determining module;
the second determining module is used for determining a second RRC parameter, where the second RRC parameter is active across different configuration objects.

In some embodiments, the activating module includes a second determining unit and a first activating unit;
the second determining unit is used for determining, based on the first configuration object and the associations, the first RRC parameter associated with the first configuration object, and receiving, from a network device, instruction information that instructs to activate the first RRC parameter associated with the first configuration object; and
the first activating unit is used for activating the first RRC parameter associated with the first configuration object.

In some embodiments, the activating module includes a third determining unit and a second activating unit;
the third determining unit is used for determining, based on the first configuration object and the associations, the first RRC parameter associated with the first configuration object, and the second activating unit is used for activating the first RRC parameter associated with the first configuration object.

In some embodiments, the apparatus further includes a second transmitting module;
the second transmitting module is used for transmitting, to a network device, feedback information indicating that the first RRC parameter associated with the first configuration object is activated.

In some embodiments, the activating module includes a fourth determining unit and a third activating unit;
the fourth determining unit is used for determining, based on the first configuration object and the associations, the first RRC parameter associated with the first configuration object, and transmitting, to a network device, feedback information indicating that the first RRC parameter associated with the first configuration object is activated; and
the third activating unit is used for activating the first RRC parameter associated with the first configuration object.

In some embodiments, the feedback information indicating that the first RRC parameter associated with the first configuration object is activated is carried by one or more of following messages:
a media access control-control element (MAC-CE) message; or
an uplink control information (UCI) message.

In some embodiments, transmitting, to the network device, the feedback information indicating that the first RRC parameter associated with the first configuration object is activated includes:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
where the second configuration object is an object used when interacting with a network before interacting with the network via the first configuration object.

In some embodiments, the apparatus further includes a first releasing module;
the first releasing module is used for releasing a first RRC parameter associated with a second configuration object, where the second configuration object is an object used when interacting with a network before interacting with the network via the first configuration object.

In some embodiments, the configuration object includes one or more of:
a network node; or
a physical layer resource.

In some embodiments, the network node includes one or more of:
a central unit (CU);
a distributed unit (DU);
a transmission reception point (TRP);
a transmission reception point (TRP) group;
a cell; or
a cell group.

In some embodiments, the physical layer resource includes one or more of:
an operating band;
a bandwidth part (BWP); or
a beam.

In some embodiments, the first RRC parameter includes one or more of:
a protocol stack configuration parameter; or
a reliability configuration parameter.

In some embodiments, the protocol stack configuration parameter includes one or more of:
a service data adaptation protocol (SDAP) layer configuration parameter;
a packet data convergence protocol (PDCP) layer configuration parameter;
a radio link control (RLC) layer configuration parameter; or
a physical layer resource configuration parameter.

In some embodiments, the reliability configuration parameter includes one or more of:
a hybrid automatic repeat request (HARQ) configuration parameter;
an automatic repeat request (ARQ) configuration parameter; or
a packet data convergence protocol (PDCP) retransmission configuration parameter.

An embodiment of the present application provides a radio resource control (RRC) parameter management apparatus, including:
a first transmitting module, used for transmitting a configuration message to a terminal, where the configuration message includes associations between configuration objects and first RRC parameters, or indication information for indicating associations between configuration objects and first RRC parameters, and the associations are used for activating a first RRC parameter associated with a first configuration object.

In some embodiments, the apparatus further includes a third transmitting module;
the third transmitting module is used for transmitting, to the terminal, a message including a second RRC parameter, where the second RRC parameter is active across different configuration objects.

In some embodiments, the apparatus further includes a fourth transmitting module;
the fourth transmitting module is used for transmitting, to the terminal, indication information indicating that the first RRC parameter associated with the first configuration object is activated.

In some embodiments, the apparatus further includes a receiving module;
the receiving module is used for receiving, from the terminal, feedback information indicating that the first RRC parameter associated with the first configuration object is activated.

In some embodiments, receiving, from the terminal, feedback information indicating that the first RRC parameter associated with the first configuration object is activated includes:
receiving, from the terminal, the feedback information indicating that the first RRC parameter associated with the first configuration object is activated via a second configuration object, using a first RRC parameter associated with the second configuration object;
receiving, from the terminal, the feedback information indicating that the first RRC parameter associated with the first configuration object is activated via the first configuration object, using the first RRC parameter associated with the first configuration object;
receiving, from the terminal, the feedback information indicating that the first RRC parameter associated with the first configuration object is activated via a second configuration object, using a preset RRC parameter; or,
receiving, from the terminal, the feedback information indicating that the first RRC parameter associated with the first configuration object is activated via the first configuration object, using a preset RRC parameter;
where the second configuration object is an object used when interacting with the terminal before interacting with the terminal via the first configuration object.

In some embodiments, the apparatus further includes a fifth transmitting module;
the fifth transmitting module is used for transmitting, to a second configuration object, feedback information indicating that the first RRC parameter associated with the first configuration object is activated.

An embodiment of the present application further provides a non-transitory readable storage medium storing a computer program, where the computer program is used for causing a processor to perform the steps of the RRC parameter management method described in the embodiments.

An embodiment of the present application further provides a processor-readable storage medium storing a computer program, where the computer program is used for causing a processor to perform the steps of the RRC parameter management method described in the embodiments.

An embodiment of the present application further provides a computer-readable storage medium storing a computer program, where the computer program is used for causing a computer to perform the steps of the RRC parameter management method described in the embodiments.

An embodiment of the present application further provides a communication device storing a computer program, where the computer program is used for causing the communication device to perform the steps of the RRC parameter management method described in the embodiments.

An embodiment of the present application further provides a chip product storing a computer program, where the computer program is used for causing the chip product to perform the steps of the RRC parameter management method described in the embodiments.

In the RRC parameter management method, apparatus, and storage medium provided by the embodiments of the present application, RRC parameters for different configuration objects are determined and activated based on associations between the configuration objects and the RRC parameters. This may avoid repeated configuration or update of the RRC parameters across the different configuration objects, thereby improving RRC parameter management efficiency and reducing RRC parameter management delay.

### BRIEF DESCRIPTION OF THE DRAWINGS

To clearly illustrate the embodiments of the present application or the prior art, the drawings used in the description of the embodiments or the prior art are briefly described below. Apparently, the drawings in the following description are only some embodiments of the present application, and other drawings may be obtained according to these drawings without any creative effort by those skilled in the art.
FIG. 1 is a schematic diagram of a radio resource control (RRC) reconfiguration procedure;
FIG. 2 is a schematic diagram of an RRC procedure delay;
FIG. 3 is a first flowchart of an RRC parameter management method provided by an embodiment of the present application;
FIG. 4 is a schematic diagram of the RRC parameter management procedure provided by an embodiment of the present application;
FIG. 5 is a schematic diagram of RRC parameter adaptive change when a terminal moves between transmission reception points (TRPs) provided by an embodiment of the present application;
FIG. 6 is a schematic diagram of RRC parameter adaptive change when a terminal accesses different operating frequencies provided by an embodiment of the present application;
FIG. 7 is a second flowchart of an RRC parameter management method provided by an embodiment of the present application;
FIG. 8 is a schematic diagram of a structure of a terminal provided by an embodiment of the present application;
FIG. 9 is a schematic diagram of a structure of a network device provided by an embodiment of the present application;
FIG. 10 is a first schematic diagram of a structure of an RRC parameter management apparatus provided by an embodiment of the present application;
FIG. 11 is a second schematic diagram of a structure of an RRC parameter management apparatus provided by an embodiment of the present application.

### DETAILED DESCRIPTION

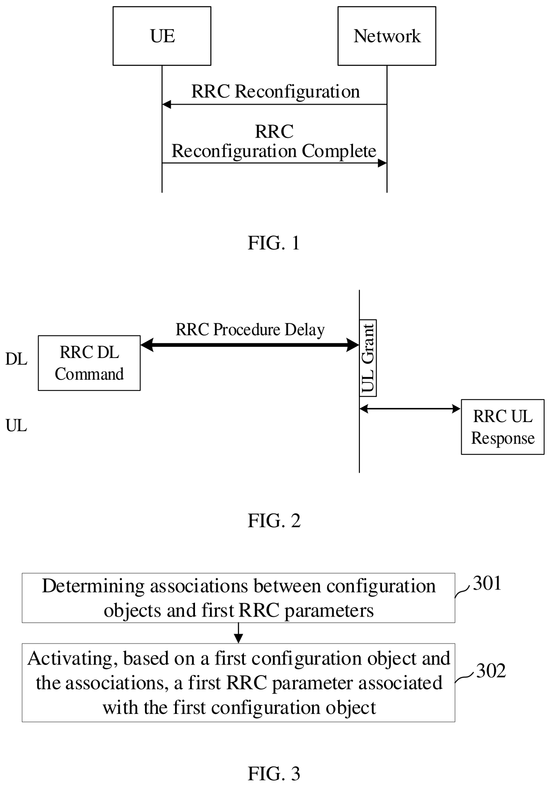

From the 3th generation mobile communication (3G) to the 5th generation mobile communication (5G), configuring a radio resource control (RRC) signaling has been widely recognized as a semi-static procedure, typically requiring RRC layer signaling interaction between a base station and a terminal/user equipment (UE). FIG. 1 shows a most commonly used RRC reconfiguration procedure. As shown in FIG. 1, most connection-state parameters are configured through the RRC reconfiguration procedure.

RRC signaling is carried by a signaling radio bearer (SRB) and undergoes processing by the packet data convergence protocol (PDCP), radio link control (RLC), media access control (MAC), or a physical layer, and connected state RRC signaling is in acknowledged mode (AM), which allows for a hybrid automatic repeat request (HARQ) retransmission (a physical layer retransmission) and an automatic repeat request (ARQ) retransmission (an RLC layer retransmission). Although reliability is guaranteed, transmission delay is relatively large. FIG. 2 is a schematic diagram of an RRC procedure delay. As shown in FIG. 2, on a downlink (DL), a network transmits an RRC DL command to a UE to allocate uplink grant (UL grant). On the uplink (UL), the UE transmits an RRC UL response to the network. It can be seen that there is a delay before an RRC signaling is activated after the RRC signaling is received by the UE.

An RRC parameter is generally considered to be a parameter that remain unchanged over a relatively long period of time, i.e., a semi-static parameter. With an evolution of the 6th generation mobile communication (6G), requirements for service rates and delay are increasing, and an effective range of a UE at any location within a network is becoming increasingly important. Semi-static RRC parameter configuration can no longer meet flexible service requirements and user-centric needs of the 6G.

In related art, an RRC parameter is configured semi-statically, and an RRC signaling takes a long time to be activated, which cannot meet increasingly diversified services and user-centric needs of the 6G. The 6G needs to consider how to flexibly and dynamically use RRC parameters while maintaining the reliability of an RRC signaling.

To address the above problems, embodiments of the present application provide an RRC parameter management method, apparatus, and storage medium. In the RRC parameter management method, apparatus, and storage medium, RRC parameters for different configuration objects are determined and activated based on associations between the configuration objects and the RRC parameters. This may avoid repeated configuration or update of the RRC parameters across the different configuration objects, thereby improving RRC parameter management efficiency and reducing RRC parameter management delay.

In order to make purposes, solutions and advantages of the present application clearer, the solutions in embodiments of the present application are clearly and completely described in conjunction with accompanying drawings in the embodiments of the present application. Apparently, these embodiments are only a part of the embodiments of the present application, and not all of the embodiments. All other embodiments obtained by those skilled in the art based on the embodiments of the present application without any creative effort belong to the scope of the present application.

FIG. 3 is a first flowchart of an RRC parameter management method provided by an embodiment of the present application. As shown in FIG. 3, an execution subject of the RRC parameter management method may be a terminal, for example, a mobile phone or the like. The method includes:
S101: determining associations between configuration objects and first RRC parameters.

In an embodiment, a UE first determines the associations between the configuration objects and the first RRC parameters.

The configuration object includes one or more of:
a network node; or
a physical layer resource.

The network node includes one or more of:
a central unit (CU);
a distributed unit (DU);
a transmission reception point (TRP)
a transmission reception point (TRP) group;
a cell; or
a cell group (CG).

The physical layer resource includes one or more of:
an operating band;
a bandwidth part (BWP); or
a beam.

In some embodiments, the associations between the configuration objects and the first RRC parameters is predefined by a protocol.

In some embodiments, the associations between the configuration objects and the first RRC parameters is configured by a network device. For example, the network device transmits a configuration message to a UE, where the configuration message includes the associations between the configuration objects and the first RRC parameters, or indication information for indicating the associations between the configuration objects and the first RRC parameters. The UE receives the configuration message transmitted by the network device, and then determines the associations between the configuration objects and the first RRC parameters.

The first RRC parameter is a differentiated RRC parameter relative to a common RRC parameter. This means that not all configuration objects are associated with a same first RRC parameter. For example, only some configuration objects are associated with a same first RRC parameter, or all configuration objects are associated with different first RRC parameters. The common RRC parameter is the same RRC parameter associated with all configuration objects. That is, the common RRC parameter is active across different configuration objects.

In some embodiments, the first RRC parameter includes one or more of:
a protocol stack configuration parameter; or
a reliability configuration parameter.

In some embodiments, the protocol stack configuration parameter includes one or more of:
a service data adaptation protocol (SDAP) layer configuration parameter, for example, a mapping of a quality of service (QoS) flow to a data radio bearer (DRB), whether reflective QoS is supported, and the like;
a packet data convergence protocol (PDCP) layer configuration parameter, for example, whether a PDCP layer concatenation is supported, a PDCP serial number (SN) length, header compression, an encryption algorithm, and the like;
a radio link control (RLC) layer configuration parameter, for example, an RLC SN length, whether RLC segmentation and resegmentation are supported, and the like; or
a physical layer resource configuration parameter, for example, a configuration related to a physical downlink control channel (PDCCH), a physical downlink shared channel (PDSCH), a physical uplink shared channel (PUSCH), or a physical uplink control channel (PUCCH), a random access resource configuration, and the like.

In some embodiments, the reliability configuration parameter includes one or more of:
a hybrid automatic repeat request (HARQ) configuration parameter, for example, a feedback resource, feedback signaling design, a retransmission configuration parameter, and the like;
an automatic repeat request (ARQ) configuration parameter, for example, whether an RLC retransmission is supported, a RLC status report configuration, and the like; or
a PDCP retransmission configuration parameter, for example, whether a PDCP retransmission is supported, a number of PDCP retransmissions, and the like.
S102: activating, based on a first configuration object and the associations, the first RRC parameter associated with the first configuration object.

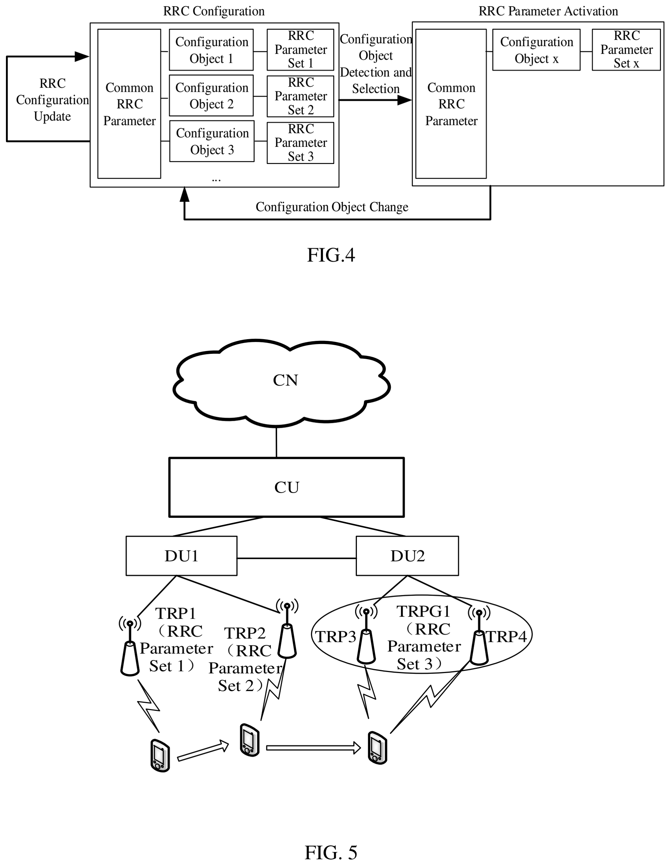

FIG. 4 is a schematic diagram of the RRC parameter management procedure provided by an embodiment of the present application. As shown in FIG. 4, in the embodiment, a UE determines associations between configurations object and first RRC parameters, and then activates, based on a first configuration object and the associations, the first RRC parameter associated with the first configuration object.

The first configuration object is an object to be used by the UE when interacting with a network. The first configuration object may be a network node or a physical layer resource.

The first RRC parameter is activated upon association with/access to the first configuration object (e.g., connection to the corresponding TRP or TRP group). The activation determination may include various methods.

For example, one implementable method is as follows. In a case where a network side detects (e.g., through a radio resource management (RRM) measurement) that the UE will associate with a pre-configured object, or has been associated with a pre-configured object (e.g., the UE has transmitted an uplink sounding signal), it indicates an RRC parameter set activated by the UE using a MAC layer signaling media access control-control element (MAC-CE) or physical layer signaling downlink control information (DCI).

For another example, in case where the UE accesses a configuration object, a corresponding RRC parameter is automatically activated, and a network side determines an activated RRC parameter through an uplink transmission transmitted by the UE on the configuration object according to the corresponding RRC parameter. This method is particularly suitable for a situation where physical layer resources are pre-configured. In the situation, the network side reserves corresponding physical layer resource configuration information for the UE, and the UE activates the physical layer configuration parameter when uses the corresponding configuration information to access the physical layer resource.

In the embodiments of the present application, "activating the first RRC parameter" means making the first RRC parameter effective, or making the first RRC parameter active.

In the RRC parameter management method provided by the embodiments of the present application, RRC parameters for different configuration objects are determined and activated based on associations between the configuration objects and the RRC parameters. This may avoid repeated configuration or update of the RRC parameters across the different configuration objects, thereby improving RRC parameter management efficiency and reducing RRC parameter management delay.

In some embodiments, determining the associations between the configuration objects and the first RRC parameters includes:
receiving a configuration message from a network device, where the configuration message includes the associations between the configuration objects and the first RRC parameters, or indication information for indicating the associations between the configuration objects and the first RRC parameters; and
determining, based on the configuration message, the associations between the configuration objects and the first RRC parameters.

In an embodiment, the associations between the configuration objects and the first RRC parameters is configured by the network device.

The network device transmitting a configuration message to a UE, where the configuration message includes the associations between the configuration objects and the first RRC parameters, or indication information for indicating the associations between the configuration objects and the first RRC parameters.

The UE receives the configuration message, and then determines the associations between the configuration objects and the first RRC parameters.

In the RRC parameter management method provided by the embodiments of the present application, the associations between the configuration objects and the first RRC parameters is configured by a network device, which improves the system flexibility and expands the system application scope.

In some embodiments, the method further includes:
determining a second RRC parameter, where the second RRC parameter is active across different configuration objects.

In an embodiment of the present application, before determining possibly different first RRC parameters associated with each configuration object, a UE may also determine a second RRC parameter, that is a common RRC parameter (or general RRC parameter) which is active across different configuration objects.

The common RRC parameter may be predefined by a protocol, or configured by a network.

For example, a network device transmits a message including the second RRC parameter to the UE.

The UE receives the message including the second RRC parameter from the network device and then determines the second RRC parameter.

In the RRC parameter management method provided by the embodiments of the present application, common RRC parameters are determined by the UE, which may avoid repeated configuration or update of the common RRC parameters across the different configuration objects, thereby improving RRC parameter management efficiency and reducing RRC parameter management delay.

In some embodiments, activating, based on the first configuration object and the associations, the first RRC parameter associated with the first configuration object includes:
determining, based on the first configuration object and the associations, the first RRC parameter associated with the first configuration object, and receiving, from a network device, instruction information that instructs to activate the first RRC parameter associated with the first configuration object; and
activating the first RRC parameter associated with the first configuration object.

The activation determination of the first RRC parameter may include various methods. In an embodiment, in a case where a network side detects (e.g., through a radio resource management (RRM) measurement) that the UE will associate with a pre-configured object, or has been associated with a pre-configured object (e.g., the UE has transmitted an uplink sounding signal), it indicates an RRC parameter set activated by the UE using a MAC layer signaling media access control-control element (MAC-CE) or physical layer signaling downlink control information (DCI).

The UE determines, based on the first configuration object and the associations between the configuration objects and the first RRC parameters, the first RRC parameter associated with the first configuration object, and receiving, from a network device, indication information indicating that the first RRC parameter associated with the first configuration object is activated, the indication information indicates an RRC parameter set activated by the UE.

Upon receiving indication information, the UE activates the first RRC parameter associated with the first configuration object.

In the RRC parameter management method provided by the embodiments of the present application, RRC parameters for different configuration objects are determined and activated based on associations between the configuration objects and the RRC parameters. This may avoid repeated configuration or update of the RRC parameters across the different configuration objects, thereby improving RRC parameter management efficiency and reducing RRC parameter management delay.

In some embodiments, activating, based on the first configuration object and the associations, the first RRC parameter associated with the first configuration object includes:
determining, based on the first configuration object and the associations, the first RRC parameter associated with the first configuration object, and activating, by a terminal, the first RRC parameter associated with the first configuration object.

The activation determination of the first RRC parameter may include various methods. In an embodiment, in a case where the UE accesses a configuration object, a corresponding RRC parameter is automatically activated, and a network side determines an activated RRC parameter through an uplink transmission transmitted by the UE on the configuration object according to the corresponding RRC parameter. This method is particularly suitable for a situation where physical layer resources are pre-configured. In the situation, the network side reserves corresponding physical layer resource configuration information for the UE, and the UE activates the physical layer configuration parameter when uses the corresponding configuration information to access the physical layer resource.

In the RRC parameter management method provided by the embodiments of the present application, RRC parameters for different configuration objects are determined and activated based on associations between the configuration objects and the RRC parameters. This may avoid repeated configuration or update of the RRC parameters across the different configuration objects, thereby improving RRC parameter management efficiency and reducing RRC parameter management delay.

In some embodiments, the method further includes:
transmitting, to a network device, feedback information indicating that the first RRC parameter associated with the first configuration object is activated.

In an embodiment of the present application, after a corresponding RRC parameter is automatically activated when a UE accesses a configuration object, the UE may also transmit, to the network device, the feedback information indicating that the first RRC parameter associated with the first configuration object is activated.

The network device receives, from the UE, feedback information indicating that the first RRC parameter associated with the first configuration object is activated, and determines that the first RRC parameter associated with the first configuration object has been activated.

In some embodiments, the feedback information indicating that the first RRC parameter associated with the first configuration object is activated is carried by one or more of following messages:
a MAC-CE message; or
an uplink control information (UCI) message.

In the RRC parameter management method provided by the embodiments of the present application, RRC parameters for different configuration objects are determined and activated based on associations between the configuration objects and the RRC parameters. This may avoid repeated configuration or update of the RRC parameters across the different configuration objects, thereby improving RRC parameter management efficiency and reducing RRC parameter management delay.

In some embodiments, activating, based on the first configuration object and the associations, the first RRC parameter associated with the first configuration object includes:
determining, based on the first configuration object and the associations, the first RRC parameter associated with the first configuration object, and transmitting, to a network device, feedback information indicating that the first RRC parameter associated with the first configuration object is activated; and
activating the first RRC parameter associated with the first configuration object.

The activation determination of the first RRC parameter may include various methods. In an embodiment, before accessing the configuration object, a UE transmits feedback information indicating that a new RRC parameter (a first RRC parameter) is activated to a network side, and activates the new RRC parameter after the feedback information is transmitted.

In the RRC parameter management method provided by the embodiments of the present application, RRC parameters for different configuration objects are determined and activated based on associations between the configuration objects and the RRC parameters. This may avoid repeated configuration or update of the RRC parameters across the different configuration objects, thereby improving RRC parameter management efficiency and reducing RRC parameter management delay.

In some embodiments, transmitting, to the network device, the feedback information indicating that the first RRC parameter associated with the first configuration object is activated includes:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
where the second configuration object is an object used when interacting with a network before interacting with the network via the first configuration object.

In an embodiment of the present application, a UE may transmit to a network device, feedback information indicating that a first RRC parameter is activated in various ways.

For example, the UE transmits, to the network device, the feedback information indicating that the first RRC parameter associated with the first configuration object is activated via a second configuration object, using a first RRC parameter associated with the second configuration object. The network device receives, from the UE, feedback information indicating that the first RRC parameter associated with the first configuration object is activated via a second configuration object, using a first RRC parameter associated with the second configuration object.

For another example, the UE transmits, to the network device, the feedback information indicating that the first RRC parameter associated with the first configuration object is activated via the first configuration object, using the first RRC parameter associated with the first configuration object. The network device receives, from the UE, feedback information indicating that the first RRC parameter associated with the first configuration object is activated via the first configuration object, using the first RRC parameter associated with the first configuration object.

For another example, the UE transmits, to the network device, the feedback information indicating that the first RRC parameter associated with the first configuration object is activated via a second configuration object, using a preset RRC parameter. The network device receives, from the UE, feedback information indicating that the first RRC parameter associated with the first configuration object is activated via a second configuration object, using a preset RRC parameter.

For another example, the UE transmits, to the network device, the feedback information indicating that the first RRC parameter associated with the first configuration object is activated via the first configuration object, using a preset RRC parameter. The network device receives, from the UE, feedback information indicating that the first RRC parameter associated with the first configuration object is activated via the first configuration object, using a preset RRC parameter.

The preset RRC parameter may be active for a group of or all UEs, or a number of the preset RRC parameters may be specified in a protocol, or the preset RRC parameter may be a common RRC parameter.

In the RRC parameter management method provided by the embodiments of the present application, RRC parameters for different configuration objects are determined and activated based on associations between the configuration objects and the RRC parameters. This may avoid repeated configuration or update of the RRC parameters across the different configuration objects, thereby improving RRC parameter management efficiency and reducing RRC parameter management delay.

In some embodiments, the method further includes:
releasing a first RRC parameter associated with a second configuration object, where the second configuration object is an object used when interacting with a network before interacting with the network via the first configuration object.

In an embodiment of the present application, if a configuration object is a network-side entity requiring signaling interaction (e.g., a DU), after the UE activates a new RRC parameter for a new configuration object, the new configuration object sends, to an original configuration object (a second configuration object), a UE new RRC parameter activation indication (or terminal leave indication).

The original configuration object releases a first RRC parameter associated with the UE, and the UE also releases a first RRC parameter associated with the original configuration object.

In some embodiments, a release method for RRC parameters of an original configuration object (which may include the first RRC parameter and/or the second RRC parameter) includes one or more of:
reconfiguring a first RRC parameter for different configuration objects via an RRC message;
after a UE determines it has left a corresponding configuration object, transmitting, to a network side, a notification to release RRC parameters of an original configuration object; or
a network side and a UE side time a period during which RRC parameters of a determined configuration object are not activated, and in a case where a continuous length of time during which the RRC parameters of the configuration object are not used reaches a certain threshold, the RRC parameters of the configuration object are released.

The RRC parameter management method provided in the embodiments of the present application reduces the resource consumption of a UE and a network device and improves the processing efficiency of the UE and the network devices by timely releasing unnecessary RRC parameters.

The methods in above embodiments are further illustrated below with several specific examples.

### Example 1.

FIG. 5 is a schematic diagram of RRC parameter adaptive change when a UE moves between transmission reception points (TRPs) provided by an embodiment of the present application. As shown in FIG. 5, in this example, the UE may adaptively change RRC parameters when moving between TRPs (TRPGs).

The network side pre-configures, to the UE, RRC parameter sets (which may include a differentiated RRC parameter and a common RRC parameter) for TRP1, TRP2, and TRPG1 (composed of TRP3 and TRP4), respectively.

Step 1. The network side pre-configures, to the UE, differentiated RRC parameter sets for different TRPs and/or TRP groups (TRPGs). The parameter sets may include a combination of one or more of a protocol stack configuration parameter or a reliability configuration parameter.

In an embodiment, a network side configures, to a UE, a common RRC parameter that is active across different configuration objects.

The UE receives the differentiated RRC parameter set pre-configured by the network side for different TRPs or TRPGs.

Step 2. In a case where the network detects that the UE is going to access a TRP or TRPG with different RRC parameters (e.g., through RRM measurement configuration and UE measurement reporting), it instructs the UE to apply a new RRC parameter using a MAC-CE or a DCI command. In a case where the network detects that the UE has accessed a TRP or TRPG with different RRC parameters (e.g., through UE uplink probe signal detection), it instructs the UE to apply a new RRC parameter using a MAC-CE command or a DCI command.

The UE receives, from the network side, the MAC-CE command or the DCI command for changing an active RRC parameter set, and applies a new RRC parameter set.

Step 3. The network side applies, to a new TRP or TRPG, RRC parameters corresponding to the new TRP or TRPG, and performs signaling and data transmission with the UE.

The UE applies, to a new TRP or TRPG, RRC parameters corresponding to the new TRP or TRPG, and performs signaling and data transmission with the network side.

Step 4. In a case where the UE changes from RRC configuration 2 (for TRP2, corresponding to DU1) to RRC configuration 3 (for TRPG1, corresponding to DU2), the network side notifies DU1 through the interface between DU2 and DU1 that the UE has changed its RRC parameters, or notifies a central unit (CU) through an F1 interface between DU2 and the CU that the UE has changed its RRC parameters.

Step 5. The network side releases the RRC parameters for an original TRP using one of following methods:
a) reconfiguring RRC parameters for different configuration objects via an RRC message;
b) receiving, from the UE, a notification for releasing the RRC parameters for the original TRP or TRPG;
c) when it is determined that the UE does not use the RRC parameters of the original TRP, starting a timer for releasing RRC parameters, and if the timer reaches a certain threshold and the RRC parameters of the original TRP have not been activated, releasing the stored RRC parameters corresponding to the TRP or TRPG.

Correspondingly, the UE releases the RRC parameters for the original TRP using one of following methods:
a) receiving an RRC message to reconfigure the RRC parameters for different configuration objects, applying the new configuration, and releasing the RRC parameters for the original TRP;
b) transmitting, to the network side, a notification for releasing the RRC parameters for the original TRP or TRPG;
c) when the RRC parameters for the original TRP are not used, starting a timer to release the RRC parameters, and if the timer reaches a certain threshold and the RRC parameters of the original TRP have not been activated, releasing the stored RRC parameters corresponding to the TRP or TRPG.

### Example 2.

In this example, a UE may adaptively change RRC parameters when moving between TRPs (TRPGs).

A network side pre-configures, to the UE, RRC parameter sets (which may include a differentiated RRC parameter and a common RRC parameter) for TRP1, TRP2, and TRPG1 (composed of TRP3 and TRP4), respectively.

Step 1. The network side pre-configures, to the UE, differentiated RRC parameter sets for different TRPs and/or TRP groups (TRPGs). The parameter sets may include a combination of one or more of protocol stack configuration parameters or a reliability configuration parameter.

In an embodiment, the network side configures, to the UE, a common RRC parameter that is active across different configuration objects.

The UE receives a differentiated RRC parameter set pre-configured by the network side for different TRPs or TRPGs.

Step 2. When the network receives an uplink transmission from the UE on a new TRP or TRPG, or when it receives a new RRC parameter activation indication from the UE, it determines to activate the new RRC configuration to the UE.

When the UE determines to access the new TRP or TRPG, it transmits a new RRC parameter activation indication to the network side on the original TRP, or transmits a new RRC parameter activation indication to the network side on the new TRP, or directly accesses the new TRP and transmits uplink transmissions according to the RRC parameters of the new TRP.

Step 3. The network side applies, to a new TRP or TRPG, RRC parameters corresponding to the new TRP or TRPG, and performs signaling and data transmission with the UE.

The UE applies, to a new TRP or TRPG, RRC parameters corresponding to the new TRP or TRPG, and performs signaling and data transmission with the network side.

Step 4. In a case where the UE changes from RRC configuration 2 (for TRP2, corresponding to DU1) to RRC configuration 3 (for TRPG1, corresponding to DU2), the network side notifies DU1 through the interface between DU2 and DU1 that the UE has changed its RRC parameters, or notifies a central unit (CU) through the F1 interface between DU2 and the CU that the UE has changed its RRC parameters.

Step 5. The network side releases the RRC parameters for an original TRP using one of following methods:
a) reconfiguring RRC parameters for different configuration objects via an RRC message;
b) receiving, from the UE, a notification for releasing the RRC parameters for the original TRP or TRPG;
c) when it is determined that the UE does not use the RRC parameters of the original TRP, starting a timer for releasing RRC parameters, and if the timer reaches a certain threshold and the RRC parameters of the original TRP have not been activated, releasing the stored RRC parameters corresponding to the TRP or TRPG.

Correspondingly, the UE releases the RRC parameters for the original TRP using one of following methods:
a) receiving an RRC message to reconfigure the RRC parameters for different configuration objects, applying the new configuration, and releasing the RRC parameters for the original TRP;
b) transmitting, to the network side, a notification for releasing the RRC parameters for the original TRP or TRPG;
c) when the RRC parameters for the original TRP are not used, starting a timer to release the RRC parameters, and if the timer reaches a certain threshold and the RRC parameters of the original TRP have not been activated, releasing the stored RRC parameters corresponding to the TRP or TRPG.

### Example 3.

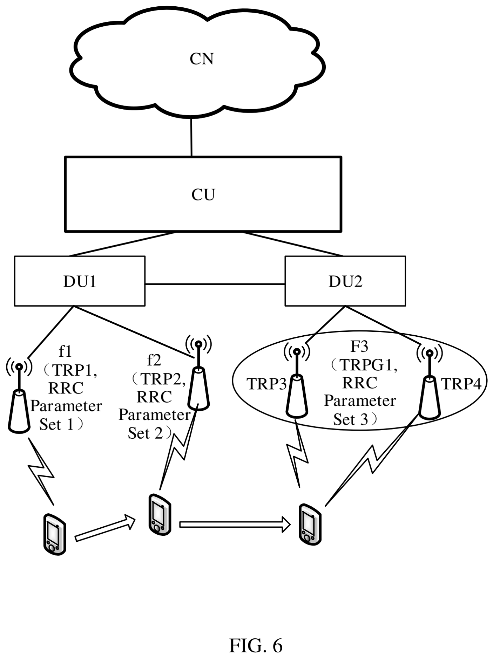

FIG. 6 is a schematic diagram of RRC parameter adaptive change when a UE accesses different operating frequencies provided by an embodiment of the present application. As shown in FIG. 6, in this example, the UE may adaptively change RRC parameters for different operating frequencies (f1 and f2).

The network side pre-configures, to the UE, RRC parameter sets (which may include a differentiated RRC parameter and a common RRC parameter) for a first operating frequency (f1), a second operating frequency (f2), and a third operating frequency (f3). Where f1 corresponds to TRP1, f2 corresponds to TRP2, and f3 corresponds to TRP3 and TRP4, TRP3 and TRP4 together form TRPG1.

Step 1. The network side pre-configures, to the UE, differentiated RRC parameter sets for different operating frequencies. The parameter sets may include a combination of one or more of protocol stack configuration parameters or a reliability configuration parameter.

In an embodiment, a network side configures, to a UE, a common RRC parameter that is active across different configuration objects.

The UE receives a differentiated RRC parameter set pre-configured by the network side for different operating frequencies.

Step 2. In a case where the network detects that the UE is going to change from f1 to f2 (e.g., through RRM measurement configuration and UE measurement reporting), it instructs the UE to apply a new RRC parameter using a MAC-CE or a DCI command. In a case where the network detects that the UE accesses the network through f2 (e.g., through UE uplink probe signal detection), it instructs the UE to apply a new RRC parameter using a MAC-CE or a DCI command.

The UE receives, from the network side, the MAC-CE command or the DCI command for changing an active RRC parameter set, and applies a new RRC parameter set.

Step 3. The network side applies RRC parameters corresponding to f2 through the f2, and performs signaling and data transmission with the UE.

The UE applies RRC parameters corresponding to f2 through the f2, and performs signaling and data transmission with the network side.

Step 4. In a case where the UE changes from f2 (for TRP2, corresponding to DU1) to f3 (for TRPG1, corresponding to DU2), the network side notifies DU1 through the interface between DU2 and DU1 that the UE has changed its RRC parameters, or notifies a central unit (CU) through the F1 interface between DU2 and the CU that the UE has changed its RRC parameters.

Step 5. The network side releases the RRC parameters for an original operating frequency using one of following methods:
a) reconfiguring RRC parameters for different configuration objects via an RRC message;
b) receiving, from the UE, a notification for releasing the RRC parameters for the operating frequency;
c) when it is determined that the UE does not use the RRC parameters of the original operating frequency, starting a timer for releasing RRC parameters, and if the timer reaches a certain threshold and the RRC parameters of the original operating frequency have not been activated, releasing the stored RRC parameters corresponding to the operating frequency.

Correspondingly, the UE releases the RRC parameters for an original operating frequency using one of following methods:
a) receiving an RRC message to reconfigure RRC parameters for different configuration objects, applying a new configuration, and releasing the RRC parameters for the original operating frequency;
b) transmitting, to the network side, a notification for releasing the RRC parameters for the original operating frequency;
c) when the RRC parameters for the original operating frequency are not used, starting a timer to release the RRC parameters, and if the timer reaches a certain threshold and the RRC parameters of the original operating frequency have not been activated, releasing the stored RRC parameters corresponding to the operating frequency.

The solutions of the embodiments of the present application may quickly apply new RRC parameters when a terminal accesses different network nodes (DU, TRP, TRPG, etc.) or different physical layer resources (different operating frequencies, etc.), ensuring continuous and reliable service data transmission. These solutions are especially suitable for user-centric networks.

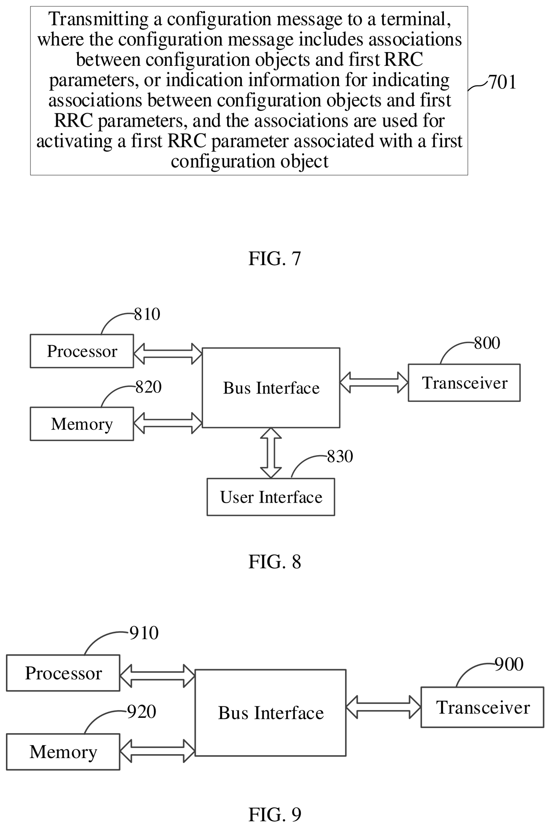

FIG. 7 is a second flowchart of an RRC parameter management method provided by an embodiment of the present application. As shown in FIG. 7, an execution subject of the RRC parameter management method may be a network device, for example, a base station or the like. The method includes:
S201: transmitting a configuration message to a terminal, where the configuration message includes associations between configuration objects and first RRC parameters, or indication information for indicating associations between configuration objects and first RRC parameters, and the associations are used for activating a first RRC parameter associated with a first configuration object.

In some embodiments, the method further includes:
transmitting, to the terminal, a message including a second RRC parameter, where the second RRC parameter is active across different configuration objects.

In some embodiments, the method further includes:
transmitting, to the terminal, indication information indicating that the first RRC parameter associated with the first configuration object is activated.

In some embodiments, the method further includes:
receiving, from the terminal, feedback information indicating that the first RRC parameter associated with the first configuration object is activated.

In some embodiments, receiving, from the terminal, feedback information indicating that the first RRC parameter associated with the first configuration object is activated includes:
receiving, from the terminal, feedback information indicating that the first RRC parameter associated with the first configuration object is activated via a second configuration object, using a first RRC parameter associated with the second configuration object;
receiving, from the terminal, feedback information indicating that the first RRC parameter associated with the first configuration object is activated via the first configuration object, using the first RRC parameter associated with the first configuration object;
receiving, from the terminal, feedback information indicating that the first RRC parameter associated with the first configuration object is activated via a second configuration object, using a preset RRC parameter; or,
receiving, from the terminal, feedback information indicating that the first RRC parameter associated with the first configuration object is activated via the first configuration object, using a preset RRC parameter;
where the second configuration object is an object used when interacting with the terminal before interacting with the terminal via the first configuration object.

In some embodiments, the method further includes:
transmitting, to a second configuration object, feedback information indicating that the first RRC parameter associated with the first configuration object is activated.

The RRC parameter management method provided by the embodiments of the present application may refer to the above-described RRC parameter management method embodiments in which the execution subject is a terminal, and may achieve the same effects. The same parts and beneficial effects in the embodiments as those in the corresponding method embodiments described above are not described in detail.

FIG. 8 is a schematic diagram of a structure of a terminal provided by an embodiment of the present application. As shown in FIG. 8, the terminal includes a memory 820, a transceiver 800 and a processor 810.

The memory 820 is used for storing a computer program; the transceiver 800 is used for receiving and transmitting data under control of the processor 810; and the processor 810 is used for reading the computer program in the memory 820 and performing following operations:
determining associations between configuration objects and first RRC parameters and
activating, based on a first configuration object and the associations, a first RRC parameter associated with the first configuration object.

In FIG. 8, a bus architecture may include any number of interconnected buses and bridges, which are linked together through various circuits of one or more processors represented by processor 810 and one or more memories represented by the memory 820. The bus architecture may also link together various other circuits, such as peripherals, voltage regulators, and power management circuits. These are well known in the art and therefore will not be described further in the present application. The bus interface provides an interface. The transceiver 800 may be multiple elements, i.e., including a transmitter and a receiver, for providing units in communication with various other devices over transmission media including wireless channels, wired channels, fiber optic cables, and the like. For different user equipment, the user interface 830 may also be an interface capable of externally or internally connecting the required equipment, and the connected equipment includes, but not limited to, a keypad, a display, a speaker, a microphone, a joystick, and the like.

The processor 810 is responsible for managing the bus architecture and general processing, and the memory 820 may store data used by the processor 810 when performing operations.

In some embodiments, the processor 810 may be a central processing unit (CPU), an application specific integrated circuit (ASIC), a field-programmable gate array (FPGA), or a complex programmable logic device (CPLD), and the processor may also use a multi-core architecture.

The processor is configured to execute any of the methods provided by the embodiments of the present application according to the obtained executable instructions by calling the computer program stored in the memory. The processor and memory may also be physically separate.

In some embodiments, determining the associations between the configuration objects and the first RRC parameters includes:
receiving a configuration message from a network device, where the configuration message includes the associations between the configuration objects and the first RRC parameters, or indication information for indicating the associations between the configuration objects and the first RRC parameters; and
determining, based on the configuration message, the associations between the configuration objects and the first RRC parameters.

In some embodiments, the processor is further used for reading the computer program in the memory and performing following operation:
determining a second RRC parameter, where the second RRC parameter is active across different configuration objects.

In some embodiments, activating, based on the first configuration object and the associations, the first RRC parameter associated with the first configuration object includes:
determining, based on the first configuration object and the associations, the first RRC parameter associated with the first configuration object, and receiving, from a network device, instruction information that instructs to activate the first RRC parameter associated with the first configuration object; and
activating the first RRC parameter associated with the first configuration object.

In some embodiments, activating, based on the first configuration object and the associations, the first RRC parameter associated with the first configuration object includes:
determining, based on the first configuration object and the associations, the first RRC parameter associated with the first configuration object, and activating the first RRC parameter associated with the first configuration object.

In some embodiments, the processor is further used for reading the computer program in the memory and performing following operation:
transmitting, to a network device, feedback information indicating that the first RRC parameter associated with the first configuration object is activated.

In some embodiments, activating, based on the first configuration object and the associations, the first RRC parameter associated with the first configuration object includes:
determining, based on the first configuration object and the associations, the first RRC parameter associated with the first configuration object, and transmitting, to a network device, feedback information indicating that the first RRC parameter associated with the first configuration object is activated; and
activating the first RRC parameter associated with the first configuration object.

In some embodiments, the feedback information indicating that the first RRC parameter associated with the first configuration object is activated is carried by one or more of following messages:
a media access control-control element (MAC-CE) message; or
an uplink control information (UCI) message.

In some embodiments, transmitting, to the network device, the feedback information indicating that the first RRC parameter associated with the first configuration object is activated includes:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
where the second configuration object is an object used when interacting with a network before interacting with the network via the first configuration object.

In some embodiments, the processor is further used for reading the computer program in the memory and performing following operation:
releasing a first RRC parameter associated with a second configuration object, where the second configuration object is an object used when interacting with a network before interacting with the network via the first configuration object.

In some embodiments, the configuration object includes one or more of:
a network node; or
a physical layer resource.

In some embodiments, the network node includes one or more of:
a central unit (CU);
a distributed unit (DU);
a transmission reception point (TRP);
a transmission reception point (TRP) group;
a cell; or
a cell group.

In some embodiments, the physical layer resource includes one or more of:
an operating band;
a bandwidth part (BWP); or
a beam.

In some embodiments, the first RRC parameter includes one or more of:
a protocol stack configuration parameter; or
a reliability configuration parameter.

In some embodiments, the protocol stack configuration parameter includes one or more of:
a service data adaptation protocol (SDAP) layer configuration parameter;
a packet data convergence protocol (PDCP) layer configuration parameter;
a radio link control (RLC) layer configuration parameter; or
a physical layer resource configuration parameter.

In some embodiments, the reliability configuration parameter includes one or more of:
a hybrid automatic repeat request (HARQ) configuration parameter;
an automatic repeat request (ARQ) configuration parameter; or
a packet data convergence protocol (PDCP) retransmission configuration parameter.

It should be noted here that the terminal provided in the embodiments of the present application may implement all the method steps implemented by the method embodiments in which the execution subject is a terminal, and may achieve the same effects. The same parts and beneficial effects in the embodiments as those in the method embodiments are not described in detail.

FIG. 9 is a schematic diagram of a structure of a network device provided by an embodiment of the present application. As shown in FIG. 9, the network device includes a memory 920, a transceiver 900 and a processor 910.

The memory 920 is used for storing a computer program; the transceiver 900 is used for receiving and transmitting data under control of the processor 910; and the processor 910 is used for reading the computer program in the memory 920 and performing following operation:
transmitting a configuration message to a terminal, where the configuration message includes associations between configuration objects and first RRC parameters, or indication information for indicating associations between configuration objects and first RRC parameters, and the associations are used for activating a first RRC parameter associated with a first configuration object.

In FIG. 9, a bus architecture may include any number of interconnected buses and bridges, which are linked together through various circuits of one or more processors represented by processor 910 and one or more memories represented by the memory 920. The bus architecture may also link together various other circuits, such as peripherals, voltage regulators, and power management circuits. These are well known in the art and therefore will not be described further in the present application. The bus interface provides an interface. The transceiver 900 may be multiple elements, i.e., including a transmitter and a receiver, for providing units in communication with various other devices over transmission media including wireless channels, wired channels, fiber optic cables, and the like. The processor 910 is responsible for managing the bus architecture and general processing, and the memory 920 may store data used by the processor 910 when performing operations.

The processor 910 may be a central processing unit (CPU), an application specific integrated circuit (ASIC), a field-programmable gate array (FPGA), or a complex programmable logic device (CPLD), and the processor may also use a multi-core architecture.

In some embodiments, the processor is further used for reading the computer program in the memory and performing following operation:
transmitting, to the terminal, a message including a second RRC parameter, where the second RRC parameter is active across different configuration objects.

In some embodiments, the processor is further used for reading the computer program in the memory and performing following operation:
transmitting, to the terminal, indication information indicating that the first RRC parameter associated with the first configuration object is activated.

In some embodiments, the processor is further used for reading the computer program in the memory and performing following operation:
receiving, from the terminal, feedback information indicating that the first RRC parameter associated with the first configuration object is activated.

In some embodiments, receiving, from the terminal, feedback information indicating that the first RRC parameter associated with the first configuration object is activated includes:
receiving, from the terminal, feedback information indicating that the first RRC parameter associated with the first configuration object is activated via a second configuration object, using a first RRC parameter associated with the second configuration object;
receiving, from the terminal, feedback information indicating that the first RRC parameter associated with the first configuration object is activated via the first configuration object, using the first RRC parameter associated with the first configuration object;
receiving, from the terminal, feedback information indicating that the first RRC parameter associated with the first configuration object is activated via a second configuration object, using a preset RRC parameter; or,
receiving, from the terminal, feedback information indicating that the first RRC parameter associated with the first configuration object is activated via the first configuration object, using a preset RRC parameter;
where the second configuration object is an object used when interacting with the terminal before interacting with the terminal via the first configuration object.

In some embodiments, the processor is further used for reading the computer program in the memory and performing following operation:
transmitting, to a second configuration object, feedback information indicating that the first RRC parameter associated with the first configuration object is activated.

The network device provided in the embodiments of the present application may implement all the method steps implemented by the method embodiments in which the execution subject is a network device, and may achieve the same effects. The same parts and beneficial effects in the embodiments as those in the method embodiments are not described in detail.

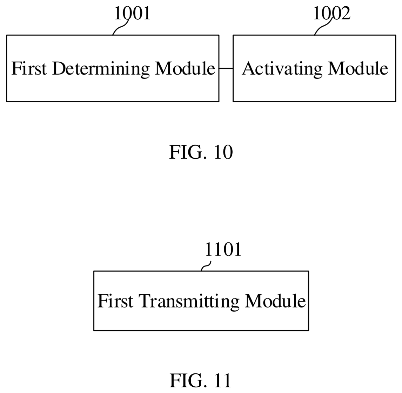

FIG. 10 is a first schematic diagram of a structure of an RRC parameter management apparatus provided by an embodiment of the present application. As shown in FIG. 10, the RRC parameter management apparatus includes a first determining module 1001 and an activating module 1002.

The first determining module 1001 is used for determining associations between configuration objects and first RRC parameters.

The activating module 1002 is used for activating, based on a first configuration object and the associations, a first RRC parameter associated with the first configuration object.

In some embodiments, the first determining module includes a receiving unit and a first determining unit;
the receiving unit is used for receiving a configuration message from a network device, where the configuration message includes the associations between the configuration objects and the first RRC parameters, or indication information for indicating the associations between the configuration objects and the first RRC parameters; and
the first determining unit is used for determining, based on the configuration message, the associations between the configuration objects and the first RRC parameters.

In some embodiments, the apparatus further includes a second determining module;
the second determining module is used for determining a second RRC parameter, where the second RRC parameter is active across different configuration objects.

In some embodiments, the activating module includes a second determining unit and a first activating unit;
the second determining unit is used for determining, based on the first configuration object and the associations, the first RRC parameter associated with the first configuration object, and receiving, from a network device, instruction information that instructs to activate the first RRC parameter associated with the first configuration object; and
the first activating unit is used for activating the first RRC parameter associated with the first configuration object.

In some embodiments, the activating module includes a third determining unit and a second activating unit;
the third determining unit is used for determining, based on the first configuration object and the associations, the first RRC parameter associated with the first configuration object, and the second activating unit is used for activating the first RRC parameter associated with the first configuration object.

In some embodiments, the apparatus further includes a second transmitting module;
the second transmitting module is used for transmitting, to a network device, feedback information indicating that the first RRC parameter associated with the first configuration object is activated.

In some embodiments, the activating module includes a fourth determining unit and a third activating unit;
the fourth determining unit is used for determining, based on the first configuration object and the associations, the first RRC parameter associated with the first configuration object, and transmitting, to a network device, feedback information indicating that the first RRC parameter associated with the first configuration object is activated; and
the third activating unit is used for activating the first RRC parameter associated with the first configuration object.

In some embodiments, the feedback information indicating that the first RRC parameter associated with the first configuration object is activated is carried by one or more of following messages:
a media access control-control element (MAC-CE) message; or
an uplink control information (UCI) message.

In some embodiments, transmitting, to the network device, the feedback information indicating that the first RRC parameter associated with the first configuration object is activated includes:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
where the second configuration object is an object used when interacting with a network before interacting with the network via the first configuration object.

In some embodiments, the apparatus further includes a first releasing module;
the first releasing module is used for releasing a first RRC parameter associated with a second configuration object, where the second configuration object is an object used when interacting with a network before interacting with the network via the first configuration object.

In some embodiments, the configuration object includes one or more of:
a network node; or
a physical layer resource.

In some embodiments, the network node includes one or more of:
a central unit (CU);
a distributed unit (DU);
a transmission reception point (TRP);
a transmission reception point (TRP) group;
a cell; or
a cell group.

In some embodiments, the physical layer resource includes one or more of:
an operating band;
a bandwidth part (BWP); or
a beam.

In some embodiments, the first RRC parameter includes one or more of:
a protocol stack configuration parameter; or
a reliability configuration parameter.

In some embodiments, the protocol stack configuration parameter includes one or more of:
a service data adaptation protocol (SDAP) layer configuration parameter;
a packet data convergence protocol (PDCP) layer configuration parameter;
a radio link control (RLC) layer configuration parameter; or
a physical layer resource configuration parameter.

In some embodiments, the reliability configuration parameter includes one or more of:
a hybrid automatic repeat request (HARQ) configuration parameter;
an automatic repeat request (ARQ) configuration parameter; or
a packet data convergence protocol (PDCP) retransmission configuration parameter.

The RRC parameter management apparatus provided in the embodiments of the present application may implement all the method steps implemented by the method embodiments in which the execution subject is a terminal, and may achieve the same effects. The same parts and beneficial effects in the embodiments as those in the method embodiments are not described in detail.

FIG. 11 is a second schematic diagram of a structure of an RRC parameter management apparatus provided by an embodiment of the present application. As shown in FIG. 11, the RRC parameter management apparatus includes a first transmitting module 1101.

The first transmitting module 1101 is used for transmitting a configuration message to a terminal, where the configuration message includes associations between configuration objects and first RRC parameters, or indication information for indicating associations between configuration objects and first RRC parameters, and the associations are used for activating a first RRC parameter associated with a first configuration object.

In some embodiments, the apparatus further includes a third transmitting module;
the third transmitting module is used for transmitting, to the terminal, a message including a second RRC parameter, where the second RRC parameter is active across different configuration objects.

In some embodiments, the apparatus further includes a fourth transmitting module;
the fourth transmitting module is used for transmitting, to the terminal, indication information indicating that the first RRC parameter associated with the first configuration object is activated.

In some embodiments, the apparatus further includes a receiving module;
the receiving module is used for receiving, from the terminal, feedback information indicating that the first RRC parameter associated with the first configuration object is activated.

In some embodiments, receiving, from the terminal, feedback information indicating that the first RRC parameter associated with the first configuration object is activated includes:
receiving, from the terminal, feedback information indicating that the first RRC parameter associated with the first configuration object is activated via a second configuration object, using a first RRC parameter associated with the second configuration object;
receiving, from the terminal, feedback information indicating that the first RRC parameter associated with the first configuration object is activated via the first configuration object, using the first RRC parameter associated with the first configuration object;
receiving, from the terminal, feedback information indicating that the first RRC parameter associated with the first configuration object is activated via a second configuration object, using a preset RRC parameter; or,
receiving, from the terminal, feedback information indicating that the first RRC parameter associated with the first configuration object is activated via the first configuration object, using a preset RRC parameter;
where the second configuration object is an object used when interacting with the terminal before interacting with the terminal via the first configuration object.

In some embodiments, the apparatus further includes a fifth transmitting module;
the fifth transmitting module is used for transmitting, to a second configuration object, feedback information indicating that the first RRC parameter associated with the first configuration object is activated.

The RRC parameter management apparatus provided in the embodiments of the present application may implement all the method steps implemented by the method embodiments in which the execution subject is a network device, and may achieve the same effects. The same parts and beneficial effects in the embodiments as those in the method embodiments are not described in detail.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

An embodiment of the present application further provides a non-transitory readable storage medium storing a computer program, where the computer program is used for causing a processor to perform the steps of the RRC parameter management method described in the above method embodiments.

The above non-transitory readable storage medium provided in the embodiments of the present application may implement all the method steps implemented by the above method embodiments, and may achieve the same effects. The same parts and beneficial effects in the embodiments as those in the method embodiments are not described in detail.

It should be noted that the non-transitory readable storage medium may be any available medium or data storage device that may be accessed by the processor, including but not limited to, a magnetic storage (e.g., a floppy disk, a hard disk, a magnetic tape, a magnetooptical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

An embodiment of the present application further provides a processor-readable storage medium storing a computer program, where the computer program is used for causing a processor to perform the steps of the RRC parameter management method described in the above method embodiments.

The above processor-readable storage medium provided in the embodiments of the present application may implement all the method steps implemented by the above method embodiments, and may achieve the same effects. The same parts and beneficial effects in the embodiments as those in the method embodiments are not described in detail.

An embodiment of the present application further provides a computer-readable storage medium storing a computer program, where the computer program is used for causing a computer to perform the steps of the RRC parameter management method described in the above method embodiments.

The above computer-readable storage medium provided in the embodiments of the present application may implement all the method steps implemented by the above method embodiments, and may achieve the same effects. The same parts and beneficial effects in the embodiments as those in the method embodiments are not described in detail.

An embodiment of the present application further provides a communication device storing a computer program, where the computer program is used for causing the communication device to perform the steps of the RRC parameter management method described in the above method embodiments.

The above communication device provided in the embodiments of the present application may implement all the method steps implemented by the above method embodiments, and may achieve the same effects. The same parts and beneficial effects in the embodiments as those in the method embodiments are not described in detail.

An embodiment of the present application further provides a chip product storing a computer program, where the computer program is used for causing the chip product to perform the steps of the RRC parameter management method described in the above method embodiments.

The above chip product provided in the embodiments of the present application may implement all the method steps implemented by the above method embodiments, and may achieve the same effects. The same parts and beneficial effects in the embodiments as those in the method embodiments are not described in detail.

It should also be noted that the terms "first", "second" and the like in the embodiments of the present application are used to distinguish similar objects and are not used to describe a particular sequence or order. It should be understood that the terms used in this way may be interchanged where appropriate so that embodiments of the present application may be implemented in a sequence other than those illustrated or described herein, and that the objects distinguished by "first" and "second" are generally of the same class and the number of objects is not limited, for example, the first object may be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, "determining B based on A" means that the factor A should be considered when determining B. This is not limited to "determining B based on A alone" and should also include "determining B based on A and C", "determining B based on A, C, and E", "determining C based on A, and further determining B based on C", and so on. Also, this could include using A as a condition for determining B, for example, "when A meets a first condition, determine B using a first method"; for another example, "when A meets a second condition, determine B" and so on; for another example, "when A meets a third condition, determine B based on a first parameter" and so on. Of course, it could also include using A as a condition for determining a factor of B, for example, "when A meets a first condition, determine C using a first method, and further determine B based on C".

In the embodiments of the present application, the term "multiple" refers to two or more than two, and other quantifiers are similar to it.

The solutions provided by the embodiments of the present application may be applicable to various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and may also include a core network part, such as an evolved packet system (EPS), a 5G system (5GS), and the like.

The terminal in the embodiments of the present application may be a device that provides voice and/or data connectivity to a user, a hand-held device with a wireless connection function, or other processing device connected to a wireless modem. In different systems, the names of the terminal may be different. For example, in the 5G system, the terminal may be called as user equipment (UE). A wireless terminal may communicate with one or more core networks (CN) via a radio access network (RAN), and the wireless terminal may be a mobile terminal, such as a mobile phone (or referred to as cellular phone) and a computer with mobile terminal, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device in the embodiments of the present application may be a base station, and the base station may include multiple cells providing services for the terminal. Depending on the specific application, the network device may also be called as an access point, or may be a device in the access network that communicates with radio terminals through one or more sectors on the air interface, or other names. The network device may be used to exchange received air frames with internet protocol (IP) packets, and act as a router between a radio terminal and the rest of the access network, and the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node, a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between a network device and a terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, a system, or a computer program product. Therefore, the present application may take the form of an entirely hardware embodiment, an entirely software embodiment, or an embodiment combining software and hardware. Moreover, the present application may take the form of a computer program product implemented on one or more computer-usable storage media having computer-usable program code, including but not limited to disk storage and optical storage, etc.

The present application is described with reference to a flow chart and/or a block diagram of a method, an apparatus (a system), and a computer program product according to embodiments of the present application. It will be understood that each flow and/or block in the flow charts and/or block diagrams, and combinations thereof may be implemented by computer-executable instructions. These computer-executable instructions may be provided to processors of a general-purpose computer, a special purpose computer, an embedded processing machine or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A radio resource control (RRC) parameter management method, performed by a terminal, the method comprising:
determining associations between configuration objects and first RRC parameters; and
activating, based on a first configuration object and the associations, a first RRC parameter associated with the first configuration object.

2. The method of claim 1, wherein determining the associations between the configuration objects and the first RRC parameters comprises:
receiving a configuration message from a network device, wherein the configuration message comprises the associations between the configuration objects and the first RRC parameters, or indication information for indicating the associations between the configuration objects and the first RRC parameters; and
determining, based on the configuration message, the associations between the configuration objects and the first RRC parameters.

3. The method of claim 1, wherein the method further comprises:
determining a second RRC parameter, wherein the second RRC parameter is active across different configuration objects.

4. The method of claim 1, wherein activating, based on the first configuration object and the associations, the first RRC parameter associated with the first configuration object comprises:
determining, based on the first configuration object and the associations, the first RRC parameter associated with the first configuration object, and receiving, from a network device, instruction information that instructs to activate the first RRC parameter associated with the first configuration object; and
activating the first RRC parameter associated with the first configuration object.

5. The method of claim 1, wherein activating, based on the first configuration object and the associations, the first RRC parameter associated with the first configuration object comprises:
determining, based on the first configuration object and the associations, the first RRC parameter associated with the first configuration object, and activating the first RRC parameter associated with the first configuration object.

6. The method of claim 5, wherein the method further comprises:
transmitting, to a network device, feedback information indicating that the first RRC parameter associated with the first configuration object is activated.

7. The method of claim 1, wherein activating, based on the first configuration object and the associations, the first RRC parameter associated with the first configuration object comprises:
determining, based on the first configuration object and the associations, the first RRC parameter associated with the first configuration object, and transmitting, to a network device, feedback information indicating that the first RRC parameter associated with the first configuration object is activated; and
activating the first RRC parameter associated with the first configuration object.

8. The method of claim 6 or 7, wherein the feedback information indicating that the first RRC parameter associated with the first configuration object is activated is carried by one or more of following messages:
a media access control-control element (MAC-CE) message; or
an uplink control information (UCI) message.

9. The method of claim 6 or 7, wherein transmitting, to the network device, the feedback information indicating that the first RRC parameter associated with the first configuration object is activated comprises:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
wherein the second configuration object is an object used when interacting with a network before interacting with the network via the first configuration object.

10. The method of claim 1, wherein the method further comprises:
releasing a first RRC parameter associated with a second configuration object, wherein the second configuration object is an object used when interacting with a network before interacting with the network via the first configuration object.

11. The method of any of claims 1 to 7 or 10, wherein the configuration object comprises one or more of:
a network node; or
a physical layer resource.

12. The method of claim 11, wherein the network node comprises one or more of:
a central unit (CU);
a distributed unit (DU);
a transmission reception point (TRP);
a transmission reception point (TRP) group;
a cell; or
a cell group.

13. The method of claim 11, wherein the physical layer resource comprises one or more of:
an operating band;
a bandwidth part (BWP); or
a beam.

14. The method of any of claims 1 to 7 or 10, wherein the first RRC parameter comprises one or more of:
a protocol stack configuration parameter; or
a reliability configuration parameter.

15. The method of claim 14, wherein the protocol stack configuration parameter comprises one or more of:
a service data adaptation protocol (SDAP) layer configuration parameter;
a packet data convergence protocol (PDCP) layer configuration parameter;
a radio link control (RLC) layer configuration parameter; or
a physical layer resource configuration parameter.

16. The method of claim 14, wherein the reliability configuration parameter comprises one or more of:
a hybrid automatic repeat request (HARQ) configuration parameter;
an automatic repeat request (ARQ) configuration parameter; or
a packet data convergence protocol (PDCP) retransmission configuration parameter.

17. A radio resource control (RRC) parameter management method, performed by a network device, comprising:
transmitting a configuration message to a terminal, wherein the configuration message comprises associations between configuration objects and first RRC parameters, or indication information for indicating associations between configuration objects and first RRC parameters, and the associations are used for activating a first RRC parameter associated with a first configuration object.

18. The method of claim 17, wherein the method further comprises:
transmitting, to the terminal, a message comprising a second RRC parameter, wherein the second RRC parameter is active across different configuration objects.

19. The method of claim 17, wherein the method further comprises:
transmitting, to the terminal, indication information indicating that the first RRC parameter associated with the first configuration object is activated.

20. The method of claim 17, wherein the method further comprises:
receiving, from the terminal, feedback information indicating that the first RRC parameter associated with the first configuration object is activated.

21. The method of claim 20, wherein receiving, from the terminal, feedback information indicating that the first RRC parameter associated with the first configuration object is activated comprises:
receiving, from the terminal, the feedback information indicating that the first RRC parameter associated with the first configuration object is activated via a second configuration object, using a first RRC parameter associated with the second configuration object;
receiving, from the terminal, the feedback information indicating that the first RRC parameter associated with the first configuration object is activated via the first configuration object, using the first RRC parameter associated with the first configuration object;
receiving, from the terminal, the feedback information indicating that the first RRC parameter associated with the first configuration object is activated via a second configuration object, using a preset RRC parameter; or,
receiving, from the terminal, the feedback information indicating that the first RRC parameter associated with the first configuration object is activated via the first configuration object, using a preset RRC parameter;
wherein the second configuration object is an object used when interacting with the terminal before interacting with the terminal via the first configuration object.

22. The method of claim 17, wherein the method further comprises:
transmitting, to a second configuration object, feedback information indicating that the first RRC parameter associated with the first configuration object is activated.

23. A terminal, comprising a memory, a transceiver and a processor,
wherein the memory is used for storing a computer program; the transceiver is used for receiving and transmitting data under control of the processor; and the processor is used for reading the computer program in the memory and performing following operations:
determining associations between configuration objects and first RRC parameters and
activating, based on a first configuration object and the associations, a first RRC parameter associated with the first configuration object.

24. The terminal of claim 23, wherein determining the associations between the configuration objects and the first RRC parameters comprises:
receiving a configuration message from a network device, wherein the configuration message comprises the associations between the configuration objects and the first RRC parameters, or indication information for indicating the associations between the configuration objects and the first RRC parameters; and
determining, based on the configuration message, the associations between the configuration objects and the first RRC parameters.

25. The terminal of claim 23, wherein the processor is further used for reading the computer program in the memory and performing following operation:
determining a second RRC parameter, wherein the second RRC parameter is active across different configuration objects.

26. The terminal of claim 23, wherein activating, based on the first configuration object and the associations, the first RRC parameter associated with the first configuration object comprises:
determining, based on the first configuration object and the associations, the first RRC parameter associated with the first configuration object, and receiving, from a network device, instruction information that instructs to activate the first RRC parameter associated with the first configuration object; and
activating the first RRC parameter associated with the first configuration object.

27. The terminal of claim 23, wherein activating, based on the first configuration object and the associations, the first RRC parameter associated with the first configuration object comprises:
determining, based on the first configuration object and the associations, the first RRC parameter associated with the first configuration object, and activating the first RRC parameter associated with the first configuration object.

28. The terminal of claim 27, wherein the processor is further used for reading the computer program in the memory and performing following operation:
transmitting, to a network device, feedback information indicating that the first RRC parameter associated with the first configuration object is activated.

29. The terminal of claim 23, wherein activating, based on the first configuration object and the associations, the first RRC parameter associated with the first configuration object comprises:
determining, based on the first configuration object and the associations, the first RRC parameter associated with the first configuration object, and transmitting, to a network device, feedback information indicating that the first RRC parameter associated with the first configuration object is activated; and
activating the first RRC parameter associated with the first configuration object.

30. The terminal of claim 28 or 29, wherein the feedback information indicating that the first RRC parameter associated with the first configuration object is activated is carried by one or more of following messages:
a media access control-control element (MAC-CE) message; or
an uplink control information (UCI) message.

31. The terminal of claim 28 or 29, wherein transmitting, to the network device, the feedback information indicating that the first RRC parameter associated with the first configuration object is activated comprises:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
wherein the second configuration object is an object used when interacting with a network before interacting with the network via the first configuration object.

32. The terminal of claim 23, wherein the processor is further used for reading the computer program in the memory and performing following operation:
releasing a first RRC parameter associated with a second configuration object, wherein the second configuration object is an object used when interacting with a network before interacting with the network via the first configuration object.

33. The terminal of any of claims 23 to 29 or 32, wherein the configuration object comprises one or more of:
a network node; or
a physical layer resource.

34. The terminal of claim 33, wherein the network node comprises one or more of:
a central unit (CU);
a distributed unit (DU);
a transmission reception point (TRP);
a transmission reception point (TRP) group;
a cell; or
a cell group.

35. The terminal of claim 33, wherein the physical layer resource comprises one or more of:
an operating band;
a bandwidth part (BWP); or
a beam.

36. The terminal of any of claims 23 to 29 or 32, wherein the first RRC parameter comprises one or more of:
a protocol stack configuration parameter; or
a reliability configuration parameter.

37. The terminal of claim 36, wherein the protocol stack configuration parameter comprises one or more of:
a service data adaptation protocol (SDAP) layer configuration parameter;
a packet data convergence protocol (PDCP) layer configuration parameter;
a radio link control (RLC) layer configuration parameter; or
a physical layer resource configuration parameter.

38. The terminal of claim 36, wherein the reliability configuration parameter comprises one or more of:
a hybrid automatic repeat request (HARQ) configuration parameter;
an automatic repeat request (ARQ) configuration parameter; or
a packet data convergence protocol (PDCP) retransmission configuration parameter.

39. A network device, comprising a memory, a transceiver and a processor,
wherein the memory is used for storing a computer program; the transceiver is used for receiving and transmitting data under control of the processor; and the processor is used for reading the computer program in the memory and performing following operation:
transmitting a configuration message to a terminal, wherein the configuration message comprises associations between configuration objects and first RRC parameters, or indication information for indicating associations between configuration objects and first RRC parameters, and the associations are used for activating a first RRC parameter associated with a first configuration object.

40. The network device of claim 39, wherein the processor is further used for reading the computer program in the memory and performing following operation:
transmitting, to the terminal, a message comprising a second RRC parameter, wherein the second RRC parameter is active across different configuration objects.

41. The network device of claim 39, wherein the processor is further used for reading the computer program in the memory and performing following operation:
transmitting, to the terminal, indication information indicating that the first RRC parameter associated with the first configuration object is activated.

42. The network device of claim 39, wherein the processor is further used for reading the computer program in the memory and performing following operation:
receiving, from the terminal, feedback information indicating that the first RRC parameter associated with the first configuration object is activated.

43. The network device of claim 42, wherein receiving, from the terminal, feedback information indicating that the first RRC parameter associated with the first configuration object is activated comprises:
receiving, from the terminal, the feedback information indicating that the first RRC parameter associated with the first configuration object is activated via a second configuration object, using a first RRC parameter associated with the second configuration object;
receiving, from the terminal, the feedback information indicating that the first RRC parameter associated with the first configuration object is activated via the first configuration object, using the first RRC parameter associated with the first configuration object;
receiving, from the terminal, the feedback information indicating that the first RRC parameter associated with the first configuration object is activated via a second configuration object, using a preset RRC parameter; or,
receiving, from the terminal, the feedback information indicating that the first RRC parameter associated with the first configuration object is activated via the first configuration object, using a preset RRC parameter;
wherein the second configuration object is an object used when interacting with the terminal before interacting with the terminal via the first configuration object.

44. The network device of claim 39, wherein the processor is further used for reading the computer program in the memory and performing following operation:
transmitting, to a second configuration object, feedback information indicating that the first RRC parameter associated with the first configuration object is activated.

45. A radio resource control (RRC) parameter management apparatus, comprising:
a first determining module, used for determining associations between configuration objects and first RRC parameters and
an activating module, used for activating, based on a first configuration object and the associations, a first RRC parameter associated with the first configuration object.

46. The apparatus of claim 45, wherein the first determining module comprises a receiving unit and a first determining unit;
the receiving unit is used for receiving a configuration message from a network device, wherein the configuration message comprises the associations between the configuration objects and the first RRC parameters, or indication information for indicating the associations between the configuration objects and the first RRC parameters; and
the first determining unit is used for determining, based on the configuration message, the associations between the configuration objects and the first RRC parameters.

47. The apparatus of claim 45, wherein the apparatus further comprises a second determining module;
the second determining module is used for determining a second RRC parameter, wherein the second RRC parameter is active across different configuration objects.

48. The apparatus of claim 45, wherein the activating module comprises a second determining unit and a first activating unit;
the second determining unit is used for determining, based on the first configuration object and the associations, the first RRC parameter associated with the first configuration object, and receiving, from a network device, instruction information that instructs to activate the first RRC parameter associated with the first configuration object; and
the first activating unit is used for activating the first RRC parameter associated with the first configuration object.

49. The apparatus of claim 45, wherein the activating module comprises a third determining unit and a second activating unit;
the third determining unit is used for determining, based on the first configuration object and the associations, the first RRC parameter associated with the first configuration object, and the second activating unit is used for activating the first RRC parameter associated with the first configuration object.

50. The apparatus of claim 49, wherein the apparatus further comprises a second transmitting module;
the second transmitting module is used for transmitting, to a network device, feedback information indicating that the first RRC parameter associated with the first configuration object is activated.

51. The apparatus of claim 45, wherein the activating module comprises a fourth determining unit and a third activating unit;
the fourth determining unit is used for determining, based on the first configuration object and the associations, the first RRC parameter associated with the first configuration object, and transmitting, to a network device, feedback information indicating that the first RRC parameter associated with the first configuration object is activated; and
the third activating unit is used for activating the first RRC parameter associated with the first configuration object.

52. The apparatus of claim 50 or 51, wherein the feedback information indicating that the first RRC parameter associated with the first configuration object is activated is carried by one or more of following messages:
a media access control-control element (MAC-CE) message; or
an uplink control information (UCI) message.

53. The apparatus of claim 50 or 51, wherein transmitting, to the network device, the feedback information indicating that the first RRC parameter associated with the first configuration object is activated comprises:
transmitting, to the network device, the feedback information indicating that the first RRC parameter associated with the first configuration object is activated via a second configuration object, using a first RRC parameter associated with the second configuration object;
transmitting, to the network device, the feedback information indicating that the first RRC parameter associated with the first configuration object is activated via the first configuration object, using the first RRC parameter associated with the first configuration object;
transmitting, to the network device, the feedback information indicating that the first RRC parameter associated with the first configuration object is activated via a second configuration object, using a preset RRC parameter; or,
transmitting, to the network device, the feedback information indicating that the first RRC parameter associated with the first configuration object is activated via the first configuration object, using a preset RRC parameter;
wherein the second configuration object is an object used when interacting with a network before interacting with the network via the first configuration object.

54. The apparatus of claim 45, wherein the apparatus further comprises a first releasing module;
the first releasing module is used for releasing a first RRC parameter associated with a second configuration object, wherein the second configuration object is an object used when interacting with a network before interacting with the network via the first configuration object.

55. The apparatus of any of claims 45 to 51 or 54, wherein the configuration object comprises one or more of:
a network node; or
a physical layer resource.

56. The apparatus of claim 55, wherein the network node comprises one or more of:
a central unit (CU);
a distributed unit (DU);
a transmission reception point (TRP);
a transmission reception point (TRP) group;
a cell; or
a cell group.

57. The apparatus of claim 55, wherein the physical layer resource comprises one or more of:
an operating band;
a bandwidth part (BWP); or
a beam.

58. The apparatus of any of claims 45 to 51 or 54, wherein the first RRC parameter comprises one or more of:
a protocol stack configuration parameter; or
a reliability configuration parameter.

59. The apparatus of claim 58, wherein the protocol stack configuration parameter comprises one or more of:
a service data adaptation protocol (SDAP) layer configuration parameter;
a packet data convergence protocol (PDCP) layer configuration parameter;
a radio link control (RLC) layer configuration parameter; or
a physical layer resource configuration parameter.

60. The apparatus of claim 58, wherein the reliability configuration parameter comprises one or more of:
a hybrid automatic repeat request (HARQ) configuration parameter;
an automatic repeat request (ARQ) configuration parameter; or
a packet data convergence protocol (PDCP) retransmission configuration parameter.

61. A radio resource control (RRC) parameter management apparatus, comprising:
a first transmitting module, used for transmitting a configuration message to a terminal, wherein the configuration message comprises associations between configuration objects and first RRC parameters, or indication information for indicating associations between configuration objects and first RRC parameters, and the associations are used for activating a first RRC parameter associated with a first configuration object.

62. The apparatus of claim 61, wherein the apparatus further comprises a third transmitting module;
the third transmitting module is used for transmitting, to the terminal, a message comprising a second RRC parameter, wherein the second RRC parameter is active across different configuration objects.

63. The apparatus of claim 61, wherein the apparatus further comprises a fourth transmitting module;
the fourth transmitting module is used for transmitting, to the terminal, indication information indicating that the first RRC parameter associated with the first configuration object is activated.

64. The apparatus of claim 61, wherein the apparatus further comprises a receiving module;
the receiving module is used for receiving, from the terminal, feedback information indicating that the first RRC parameter associated with the first configuration object is activated.

65. The apparatus of claim 64, wherein receiving, from the terminal, feedback information indicating that the first RRC parameter associated with the first configuration object is activated comprises:
receiving, from the terminal, the feedback information indicating that the first RRC parameter associated with the first configuration object is activated via a second configuration object, using a first RRC parameter associated with the second configuration object;
receiving, from the terminal, the feedback information indicating that the first RRC parameter associated with the first configuration object is activated via the first configuration object, using the first RRC parameter associated with the first configuration object;
receiving, from the terminal, the feedback information indicating that the first RRC parameter associated with the first configuration object is activated via a second configuration object, using a preset RRC parameter; or,
receiving, from the terminal, the feedback information indicating that the first RRC parameter associated with the first configuration object is activated via the first configuration object, using a preset RRC parameter;
wherein the second configuration object is an object used when interacting with the terminal before interacting with the terminal via the first configuration object.

66. The apparatus of claim 61, wherein the apparatus further comprises a fifth transmitting module;
the fifth transmitting module is used for transmitting, to a second configuration object, feedback information indicating that the first RRC parameter associated with the first configuration object is activated.

67. A non-transitory readable storage medium storing a computer program, wherein the computer program is used for causing a processor to perform the method of any of claims 1 to 16.

68. A non-transitory readable storage medium storing a computer program, wherein the computer program is used for causing a processor to perform the method of any of claims 17 to 22.
